# EUROPÄISCHE PATENTSCHRIFT

(11) **EP 2 641 817 B1**
(45) Veröffentlichungstag und Bekanntmachung des Hinweises auf die Patenterteilung: **07.08.2019**
(21) Anmeldenummer: 13158084.7
(22) Anmeldetag: 07.03.2013
(51) Int. Cl.: B62D 25/20, B62D 21/17, B60H 1/24, B62D 33/04

(54) **Ladeboden sowie Profilelement für einen Ladeboden**
Loading floor and profiled element for a loading floor
Plancher de chargement et élément de profilé pour un plancher de chargement

(30) Priorität: 23.03.2012 DE 102012204713
(43) Veröffentlichungstag der Anmeldung: 25.09.2013
(73) Patentinhaber: Ford-Werke GmbH, 50735 Köln (DE)
(72) Erfinder: Baldsiefen, Lothar, 50769 Köln (DE); Huth, René A., 53797 Lohmar (DE); Valter, Dino, 52355 Düren (DE)
(74) Vertreter: Dörfler, Thomas

(56) Entgegenhaltungen:
- WO-A1-2004/041626
- WO-A2-03/047907
- WO-A2-2010/147797
- DE-U1-202011 051 401
- SU-A1- 753 684
- US-A- 3 416 280
- US-A- 4 744 225

## Beschreibung

Die Erfindung betrifft einen Ladeboden für ein Fahrzeug sowie ein Profilelement für einen derartigen Ladeboden.

Der Laderaum von Fahrzeugen ist in der Regel mit einem auf einer Bodenplatte oder einer Tragstruktur des Fahrzeugs befestigten Ladeboden versehen, der zur Vereinfachung der Beladung als im Wesentlichen ebene Fläche ausgebildet ist und die Last der Ladung aufnimmt. Ferner ist bei der Beladung von Fahrzeugen häufig die Aufgabe gestellt, Gegenstände sicher zu befestigen, so dass diese während der Fahrt am Fahrzeug fixiert sind. Hierfür weisen bekannte Ladeböden beispielsweise feststehende Ösen zur Aufnahme von Zurrgurten auf oder auch an Ladeschienen verschiebbare Befestigungselemente, die in eine Vielzahl von Positionen gebracht werden können und an denen beispielsweise Ösen für Zurrgurte angeordnet sind. Der Ladeboden kann aus einer Mehrzahl von Profilelementen zusammengesetzt sein, die derartige Ladeschienen aufweisen. Bei einigen Fahrzeugen ist auch eine wahlweise Benutzung als Laderaum oder als Passagierraum möglich. Dabei besteht die Möglichkeit, auf dem Ladeboden Sitze zu befestigen.

Aus der US 3 877 671 ist ein Ladeboden mit integrierten Ladeschienen bekannt, der aus einzelnen extrudierten Elementen besteht, die miteinander verklebt werden. In der EP 1 901 955 B1 ist eine Bodenplatte offenbart, die aus einer Vielzahl von parallelen Elementen besteht, die jeweils an einem Boden eines Fahrzeugs befestigt werden. In der EP 1 701 860 B1 ist eine Bodenplatte offenbart, die aus Schienenprofil- und Bodenprofilteilen besteht und am Bodenblech von Transportfahrzeugen befestigt wird, wobei die Schienen- und Bodenprofilteile mechanisch miteinander verriegelt werden können. Aus der WO 01/38127 A1 ist ein Fahrzeugboden bekannt, der aus einer Mehrzahl ineinander eingreifender langerstreckter Profilbauteile zusammengesetzt ist, wobei einige der Profilbauteile sich in Längsrichtung erstreckende Nuten zur Aufnahme von Verankerungselementen zur Befestigung eines Sitzes oder einer Rollstuhlhalterung aufweisen. In der nicht vorveröffentlichten Patentanmeldung DE 10 2011 079 337.2 ist ein Ladeboden beschrieben, der aus einer Mehrzahl von Profilelementen besteht, die miteinander verbunden sind, wobei zumindest einige Profilelemente mindestens eine Ladeschiene und mindestens einen Verbindungsbereich zur Verbindung mit einem weiteren Profilelement umfassen, wobei die Ladeschiene eine Längsnut zur längsverschiebbaren Aufnahme von Gleitsteinen aufweist und die Ladeschiene in das jeweilige Profilelement integriert und von dem mindestens einen Verbindungsbereich separat ausgebildet ist.

Sowohl bei einer Verwendung eines derartigen Ladebodens zur Befestigung von Sitzen in einem für den Personentransport bestimmten Fahrzeug bzw. Bereich eines Fahrzeugs als auch bei einer Verwendung des Ladebodens in einem Laderaum eines Fahrzeugs besteht ein Bedarf an einer Klimatisierung des durch den Ladeboden begrenzten Raums. In der GB 2 353 769 A wird vorgeschlagen, dass ein Fahrzeugboden aus einer Mehrzahl vorgeformter ineinander fügbarer Fußbodenkomponenten besteht, die innere längserstreckte Hohlräume aufweisen, die zur Führung von Kabeln oder einer Ventilation oder auch für Heizungszwecke genutzt werden können. Hierdurch ist jedoch lediglich eine Temperierung des Fahrzeugbodens selbst möglich.

Aus WO 2004/041626 A1 ist ein Chassis und/oder Tragstruktur eine Kraftfahrzeugs bekannt, das bzw. die ganz oder teilweise als Hohlkammerplattenstruktur ausgebildet ist, wobei die Hohlkammerplatten als Strangpressprofile ausgebildet sein können. Dabei sind innerhalb des Chassis und/oder der Tragstruktur Strömungskanäle ausgebildet, wobei durch die oder einen Teil der Strömungskanäle eine Fahrgastzelle be- und entlüftet wird.

In WO 2010/147797 A2 ist ein Temperatur-kontrollierter Container offenbart, wobei der Boden des Containers einen Unterboden und einen Lastboden umfasst. Der Lastboden umfasst eine Mehrzahl von T-Trägern, deren horizontale Elemente mit ihren oberen Flächen zusammen die lasttragende Oberfläche bilden und deren vertikale Elemente sich vom Unterboden nach oben erstrecken. Zwischen den vertikalen Elementen sind Kanäle gebildet, durch die konditionierte Luft geleitet wird.

In WO 03/047907 A2 sind Fahrzeugbodenbeläge mit röhrenförmigen Luftführungen beschrieben, die ausgebildet sind, um Luft von Luftquellen durch eine poröse Struktur des Bodenbelags in einen Fahrzeuginnenraum zu liefern. Die röhrenförmigen Luftführungen können eine Mehrzahl von Luftauslässen aufweisen, die mit Öffnungen in der Materialschicht, in der die Luftführungen angeordnet sind, kommunizieren.

Es ist Aufgabe der vorliegenden Erfindung, einen Ladeboden der genannten Art sowie ein Profilelement für einen Ladeboden anzugeben, wobei eine verbesserte Klimatisierung des durch den Ladeboden begrenzten Innenraums ermöglicht wird.

Diese Aufgabe wird durch einen Ladeboden sowie durch ein Profilelement für einen Ladeboden wie in den unabhängigen Ansprüchen angegeben gelöst.

Ein erfindungsgemäßer Ladeboden ist insbesondere für einen Lade- oder einen Passagierraum eines Fahrzeugs geeignet, kann aber auch beispielsweise als Wand- oder Deckenverkleidung in einem Fahrzeug eingesetzt werden. Der Ladeboden umfasst eine Mehrzahl von langerstreckten Profilelementen, die nebeneinander im Wesentlichen parallel zueinander angeordnet und miteinander verbunden sind.

Die Profilelemente sind vorzugsweise quer zu ihrer Längsrichtung formschlüssig miteinander verbunden, können aber auch beispielsweise reibschlüssig verbunden, verklebt und/oder verschweißt oder auf andere Weise miteinander verbunden sein. Vorzugsweise sind die Profilelemente durch Extrusion, beispielsweise als Aluminium-Strangpressprofile, hergestellt. Der Ladeboden kann neben den Profilelementen weitere Elemente umfassen, etwa endseitige Abdeckkappen oder Elemente zur Befestigung des Ladebodens auf einer Bodenplatte oder einer Tragstruktur des Fahrzeugs.

Der erfindungsgemäße Ladeboden weist einen in der Längsrichtung der Profilelemente durchgehenden Hohlraum auf, der mindestens eine in der Längsrichtung nicht durchgehende seitliche Öffnung zu einem Außenraum des Ladebodens aufweist und im Übrigen seitlich geschlossen ist. Der Hohlraum kann stirnseitig offen sein, ist jedoch auf seinen übrigen Seiten bis auf die seitliche Öffnung abgeschlossen, die sich nur über einen Teil der Längserstreckung des Profilelements erstreckt, vorzugsweise über einen kleinen Teil. Die Öffnung kann beispielsweise als in das als Strangpressprofil hergestellte Profilelement eingebrachte Bohrung ausgebildet sein. Vorzugsweise weist mindestens eines der miteinander verbundenen Profilelemente einen derartigen Hohlraum auf, es ist jedoch auch möglich, dass ein solcher Hohlraum erst durch die Verbindung bzw. durch das Zusammenfügen von zwei oder mehr Profilelementen zum Aufbau des erfindungsgemäßen Ladebodens gebildet wird.

Dadurch, dass der Ladeboden oder zumindest eines der Profilelemente, aus denen der Ladeboden zusammengesetzt ist, einen durchgehenden Hohlraum aufweist, der mindestens eine in der Längsrichtung der Profilelemente nicht durchgehende seitliche Öffnung aufweist und im Übrigen seitlich geschlossen ist, wird es ermöglicht, dass ein Klimatisierungsluftstrom, der durch den Hohlraum geleitet werden kann, aus dem Hohlraum austritt und dadurch in einen Außenraum des Profilelements bzw. des Ladebodens, nämlich in einen Innenraum des Fahrzeugs, gelangt. Hierdurch wird eine direkte Klimatisierung des von dem Ladeboden begrenzten Raums des Fahrzeugs ermöglicht. Insbesondere wird es hierdurch ermöglicht, erwärmte oder gekühlte und/oder auf einen bestimmten Feuchtigkeitsgehalt eingestellte Klimatisierungsluft in den durch den Ladeboden begrenzten Raum an einer durch die seitliche Öffnung bestimmten Position, die hinsichtlich der Klimatisierungswirkung optimal gewählt werden kann, gezielt einzuleiten. Dies gilt in besonderem Maße dann, wenn der Ladeboden nicht nur als Boden, sondern auch als Wand und/oder Decke eines Laderaums oder eines Passagierraums eines Fahrzeugs verwendet wird. So kann beispielsweise die Öffnung in einem in Längsrichtung mittleren Bereich des Ladebodens platziert sein, um eine optimale Einleitung der Klimatisierungsluft zu ermöglichen.

Gemäß einer bevorzugten Ausführungsform der Erfindung wird der mindestens eine in der Längsrichtung durchgehende Hohlraum zwischen einer Oberstruktur eines Profilelements, einer Unterstruktur des Profilelements und/oder mindestens einer die Ober- und die Unterstruktur des Profilelements verbindenden Strebe ausgebildet. Die Ober- und die Unterstruktur können zur Ausbildung einer flachen Ober- bzw. Unterseite des Ladebodens eine im Wesentlichen ebene Ober- bzw. Unterseite aufweisen. Zur Erzielung einer hohen Steifigkeit des Ladebodens bei einem geringen Gewicht sind die Ober- und die Unterstruktur vorzugsweise voneinander beabstandet und durch mindestens eine Verstrebung miteinander verbunden. Die Verstrebung kann etwa durch eine oder mehrere senkrecht oder schräg zur Ober- bzw. Unterstruktur ausgebildete, in Längsrichtung des Profilelements durchgehende Streben gebildet werden. Durch einen derartigen Aufbau des Profilelementes werden ein oder mehrere durchgehende, seitlich geschlossene Hohlräume zwischen Oberstruktur, Unterstruktur und/oder Streben gebildet, die gemäß der bevorzugten Ausführungsform mit mindestens einer nicht durchgehenden seitlichen Öffnung in einen Außenraum versehen werden können. Hierdurch können etwa aus Stabilitäts- und Gewichtsgründen vorhandene Hohlräume der Profilelemente bzw. des Ladebodens zur Durchleitung von Klimatisierungsluft genutzt werden. Damit ist eine Verbesserung der Klimatisierung des Fahrzeuginnenraums mit minimalem Aufwand möglich.

Vorzugsweise ist der Hohlraum zumindest in einem seiner beiden Endbereiche mit einer Klimatisierungsluftleitung verbindbar. Insbesondere kann der Hohlraum an mindestens einer der Stirnseiten des Ladebodens offen und derart ausgebildet sein, dass eine Klimatisierungsluftleitung zur Einleitung von Klimatisierungsluft in den Hohlraum anschließbar ist. An der anderen Stirnseite kann der Hohlraum ebenfalls offen sein, ist aber vorzugsweise verschlossen oder verschließbar. Hierdurch kann auf besonders einfache Weise von einem Klimatisierungssystem, etwa einer Klimaanlage des Fahrzeugs, bereitgestellte Klimatisierungsluft in den Hohlraum eingeleitet und durch den Hohlraum in den zu klimatisierenden Innenraum des Fahrzeugs eingeleitet werden.

Weiterhin ist es bevorzugt, dass der Ladeboden mehrere durchgehende Hohlräume aufweist, die jeweils mindestens eine seitliche Öffnung zu einem Außenraum des Ladebodens haben können. Hierfür kann der Ladeboden mindestens ein Profilelement umfassen, das eine Mehrzahl derartiger Hohlräume aufweist und/oder der Ladeboden kann eine Mehrzahl von Profilelementen mit jeweils mindestens einem derartigen Hohlraum umfassen. Vorzugsweise sind die mehreren Hohlräume an mindestens einer Stirnseite des Ladebodens mit einem Klimatisierungsluftverteiler verbindbar, an den eine Klimatisierungsluftleitung zur Zuführung der Klimatisierungsluft in die mehreren Hohlräume anschließbar ist. Hierdurch kann eine besonders gleichmäßige Verteilung der Klimatisierungsluft durch Einleitung über mehrere Hohlräume in den an den Ladeboden angrenzenden Raum erreicht werden.

Gemäß einer weiteren bevorzugten Ausführungsform der Erfindung weist der Ladeboden mehrere Öffnungen auf, die vorzugsweise jeweils auf derselben Seite des Ladebodens angeordnet sind, nämlich auf der dem Innenraum des Fahrzeugs zugewandten Seite. Insbesondere kann ein Hohlraum eines Profilelements des Ladebodens mehrere Öffnungen aufweisen, die in Längsrichtung gegeneinander versetzt sind. Hierdurch kann eine weiter verbesserte Einleitung der Klimatisierungsluft in den Innenraum des Fahrzeugs erreicht werden.

Weiterhin ist es bevorzugt, dass die mehreren Öffnungen des Ladebodens bzw. des Profilelements des Ladebodens unterschiedliche Öffnungsweiten aufweisen. Hierdurch ist eine besonders gezielte und hochwirksame Einleitung von Klimatisierungsluft in den Innenraum des Fahrzeugs möglich.

So können beispielsweise die Öffnungsweiten mehrerer, in Längsrichtung gegeneinander versetzter Öffnungen eines Hohlraums eines Profilelements mit einem Abstand von einem Endbereich, in dem eine Klimatisierungsluftleitung oder ein Klimatisierungsluftverteiler an den Hohlraum anschließbar ist, zunehmen. Sind die Öffnungen beispielsweise als kreisförmige Bohrungen ausgeführt, so nimmt in diesem Fall der Durchmesser der Bohrungen mit dem Abstand von dem zum Verbinden mit der Klimatisierungsluftleitung bestimmten Endbereich zu. Insbesondere kann die Öffnungsweite derart zunehmen, dass sich für das Austreten der Klimatisierungsluft aus den einzelnen Öffnungen ein unter Berücksichtigung der unterschiedlichen Weglängen jeweils annähernd gleicher Strömungswiderstand ergibt. Hierdurch kann eine besonders gleichmäßige Verteilung der Klimatisierungsluft erreicht werden.

Alternativ oder zusätzlich können die Öffnungen unterschiedlicher Hohlräume eines Profilelements und/oder die Öffnungen von Hohlräumen unterschiedlicher Profilelemente unterschiedliche Öffnungsweiten aufweisen. So können etwa die Öffnungen von Hohlräumen in Profilelementen, die den Randbereich des Ladebodens bilden, größer als die Öffnungen von Hohlräumen anderer Profilelemente sein. Es kann auch beispielsweise die Weite der in Längsrichtung gesehen jeweils ersten und/oder letzten Öffnung eines Hohlraums größer sein als die der übrigen Öffnungen desselben Hohlraums. Hierdurch kann die Einleitung von Klimatisierungsluft dem zu klimatisierenden Raum optimal angepasst werden, indem eine verstärkte Einleitung von Klimatisierungsluft im Rand- bzw. wandnahen Bereich eines Innenraums des Fahrzeugs erfolgt. Auch hierdurch kann eine gleichmäßigere Klimatisierung des Innenraums erreicht werden.

Vorzugsweise weist mindestens ein Profilelement des Ladebodens mehrere sich in Längsrichtung erstreckende Hohlräume auf, die miteinander durch mindestens einen Durchbruch in einer die Hohlräume trennenden Trennwand, etwa einer durchgehenden Strebe, verbunden sind. Die mehreren Hohlräume weisen jeweils eine oder mehrere seitliche Öffnungen zum Außenraum des Ladebodens auf. Vorzugsweise ist mindestens einer der mehreren Hohlräume des Profilelements stirnseitig verschließbar oder verschlossen und steht mit einem anderen Hohlraum, in den stirnseitig Klimatisierungsluft eingeleitet werden kann, in Verbindung. Hierdurch kann auf einfache Weise eine besonders gleichmäßige Verteilung der Klimatisierungsluft erreicht werden.

Gemäß einer besonders bevorzugten Ausführungsform Erfindungsgemäß weist mindestens ein Profilelement eine Längsnut auf, wobei die seitliche Öffnung des Hohlraums in der Längsnut mündet. Die Längsnut ist insbesondere zu einer Oberseite des Profilelements, d.h. zum Innenraum des Fahrzeugs, offen. Die Längsnut kann beispielsweise als Längsnut einer Ladeschiene ausgebildet sein, in der ein Gleitstein verschiebbar geführt ist, oder das Profilelement kann auch selbst als Ladeschiene ausgebildet sein. Dadurch, dass die durch den Hohlraum des Profilelements eingeleitete Klimatisierungsluft durch die in der Längsnut mündende Öffnung austreten kann, wird erreicht, dass die Öffnung nicht durch ein darauf aufliegendes Ladegut verschlossen werden kann und unabhängig von der Position eines solchen Ladeguts eine Zuführung der Klimatisierungsluft in den durch den Ladeboden begrenzten Raum, insbesondere einen Laderaum des Fahrzeugs, möglich ist. Ferner wird es auf diese Weise erleichtert, zwischen den Längsnuten auf der Oberseite des Ladebodens einen Teppich oder eine reibungserhöhende Auflage aufzubringen, ohne dadurch die Öffnungen zur Einleitung von Klimatisierungsluft in den Innenraum des Fahrzeugs zu verdecken.

Vorzugsweise ist die mindestens eine Öffnung in einem Seitenbereich der Längsnut angeordnet. Hierdurch kann eine Verschmutzung und ein möglicher Verschluss der Öffnung durch Verschmutzung besonders sicher vermieden werden. Die mindestens eine Öffnung kann aber auch im Bodenbereich der Längsnut angeordnet sein, wodurch die Herstellung des Profilelements und das Einbringen der Bohrungen erleichtert wird.

Ein erfindungsgemäßes Profilelement für einen Ladeboden eines Fahrzeugs weist einen Hohlraum auf, der sich in einer Längsrichtung des Profilelements erstreckt und von einem zum anderen Ende des Profilelements durchgehend ausgebildet ist. Der Hohlraum weist mindestens eine in der Längsrichtung nicht durchgehende seitliche Öffnung zu einem Außenraum des Profilelements auf und ist im Übrigen seitlich abgeschlossen. Das Profilelement kann ferner Anschlusselemente umfassen, die beispielsweise als Rastvorsprünge und Rastnuten ausgebildet sein können, zur Verbindung mit weiteren Profilelementen, um aus den Profilelementen einen Ladeboden zusammenzusetzen. Insbesondere kann das Profilelement ausgebildet sein, um durch Verbindung mit weiteren Profilelementen einen Ladeboden der oben beschriebenen Art herzustellen.

Die Erfindung wird nachfolgend anhand der Zeichnungen beispielhaft näher erläutert. Es zeigen:
- Fig. 1: ein Ausführungsbeispiel eines erfindungsgemäßen Ladebodens in perspektivischer Ansicht;
- Fig. 2: einen Teil des Ausführungsbeispiels gemäß Fig. 1 in vergrößerter perspektivischer Ansicht.

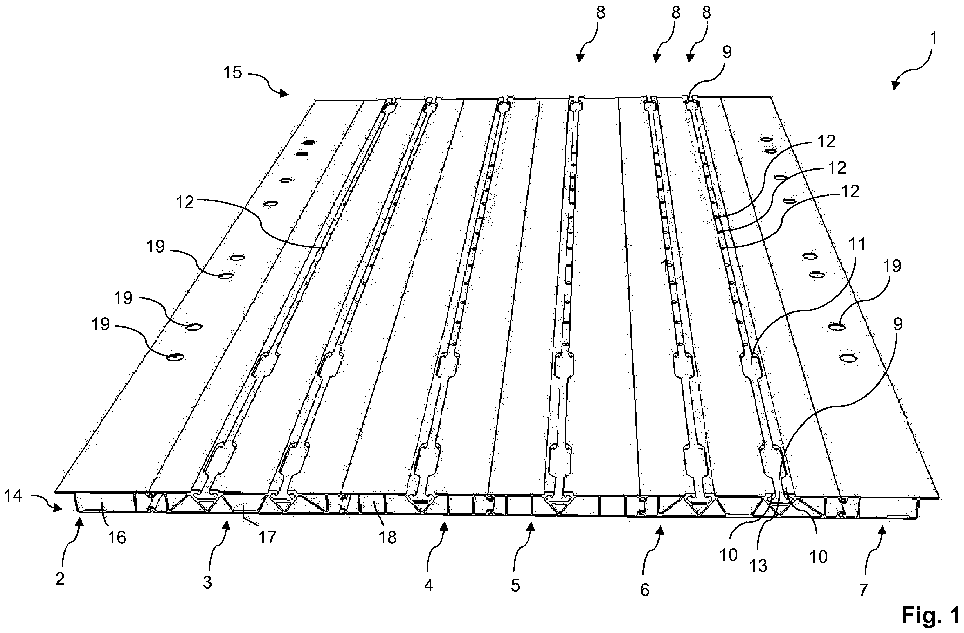

Der in Fig. 1 dargestellte Ladeboden 1 eines Fahrzeugs umfasst eine Mehrzahl von langerstreckten Profilelementen 2, 3, 4, 5, 6, 7, die als Randelemente 2, 7, Zwischenelemente 3, 6 und Mittelelemente 4, 5 ausgebildet sind. In dem in Fig. 1 gezeigten Ausführungsbeispiel sind die beiden Mittelelemente 4, 5 gleichartig ausgebildet; auch beiden Zwischenelemente 3, 6 sind untereinander gleich. Die Randelemente 2, 7 sind bis auf die Verbindung mit den Zwischenelementen 3, 6 ebenfalls gleich. Die Profilelemente 2, 3, 4, 5, 6, 7 sind nebeneinander parallel zueinander angeordnet und miteinander zu dem flächigen Ladeboden 1 verbunden, der auf einer Bodenplatte oder einer Tragstruktur eines Fahrzeugs befestigt werden kann.

Wie in Fig. 1 gezeigt, sind in die Oberseite des im Wesentlichen glatten Ladebodens 1 eine Mehrzahl von Ladeschienen 8 integriert. Jede Ladeschiene 8 weist eine nach oben offene Längsnut 9 auf, die im oberen Bereich durch seitliche Vorsprünge 10 abschnittsweise derart eingeengt ist, so dass ein in die Längsnut 9 eingesetzter, in Fig. 1 nicht dargestellter Gleitstein nur in den Aussparungen 11 nach oben entnommen werden kann. In den durch die Vorsprünge 10 verengten Abschnitten der Längsnut 9 kann der Gleitstein zur Fixierung einer Last befestigt werden, beispielsweise verschraubt oder verklemmt.

Entlang der Längserstreckung des Zwischenelements 6 sind im Boden der Längsnut 9 eine Mehrzahl an Bohrungen 12 angeordnet, die in den darunterliegenden, durchgehenden längserstreckten Hohlraum 13 des Profilelements 6 reichen und eine Verbindung zwischen dem Hohlraum 13 und dem Laderaum oder Passagierraum des Fahrzeugs, dessen Boden der Ladeboden 1 bildet, herstellen. An einem vorderen Stirnende 14 des Ladebodens 1 kann eine Luftzuführung zur Zuführung von Klimatisierungsluft an den Hohlraum 13 angeschlossen werden, während am hinteren Stirnende 15 der Hohlraum 13 beispielsweise durch einen Stopfen oder durch eine beim Einbau des Ladebodens erfolgende Abdichtung verschlossen werden kann (nicht dargestellt). Wird nun von einem Klimatisierungssystem des Fahrzeugs geförderte Klimatisierungsluft über eine angeschlossene Klimatisierungsluftleitung in den Hohlraum 13 eingeleitet, so dringt diese Luft durch die Bohrungen 12 und die Längsnut 9 in den über dem Ladeboden 1 befindlichen Innenraum des Fahrzeugs ein und ermöglicht eine besonders effiziente Klimatisierung des Innenraums, der etwa ein Laderaum eines Kühltransporters oder auch ein Passagierraum des Fahrzeugs sein kann. Die Zwischenelemente 3, 6 weisen im dargestellten Ausführungsbeispiel jeweils zwei derart ausgebildete Längsnuten 9 auf, während die Mittelelemente 4, 5 jeweils eine solche Längsnut 9 umfassen.

Die Hohlräume 16 der Randelemente 2, 7 sind durch die Bohrungen 19 zum Innenraum des Fahrzeugs hin offen. Diese Bohrungen können einen größeren Durchmesser als die Bohrungen 12 in den Längsnuten 9 aufweisen, um einen erhöhten Durchstrom von Klimatisierungsluft im Randbereich des Ladebodens 1 und damit im Randbereich des durch diesen begrenzten Lade- oder Passagierraums zu gewährleisten. Am vorderen Stirnende 14 des Ladebodens 1 kann eine Klimatisierungsluftzuführung oder ein Klimatisierungsluftverteiler an die Hohlräume 16 der Randelemente 2, 7 angeschlossen werden, während die hinteren Enden der Hohlräume 16 verschlossen werden können.

Auch die weiteren Hohlräume 17, 18 der Zwischen- bzw. Mittelelemente 3, 4, 5, 6, die keine Öffnungen zum Innenraum des Fahrzeugs aufweisen, können mit Klimatisierungsluft durchströmbar sein, um auch die von den Wänden der weiteren Hohlräume 17, 18 gebildeten Bereiche des Ladebodens entsprechend der Temperatur der Klimatisierungsluft besser zu temperieren. Hierfür können die weiteren Hohlräume 17, 18 endseitig mit Klimatisierungsluftleitungen verbunden werden. So kann es beispielsweise vorgesehen sein, dass in die keine seitlichen Öffnungen aufweisenden weiteren Hohlräume 17, 18 Luft vom vorderen Stirnende 14 des Ladebodens eingeleitet wird und durch Verbindungsleitungen, die am hinteren Stirnende 15 des Ladebodens 1 ansetzen, in die mit Bohrungen versehenen Hohlräume 13, 16 geleitet werden, die in diesem Fall am vorderen Stirnende 14 verschlossen sind. Hierdurch wird eine optimale Ausnutzung der vom Klimatisierungssystem des Fahrzeugs bereitgestellten Klimatisierungsluft ermöglicht.

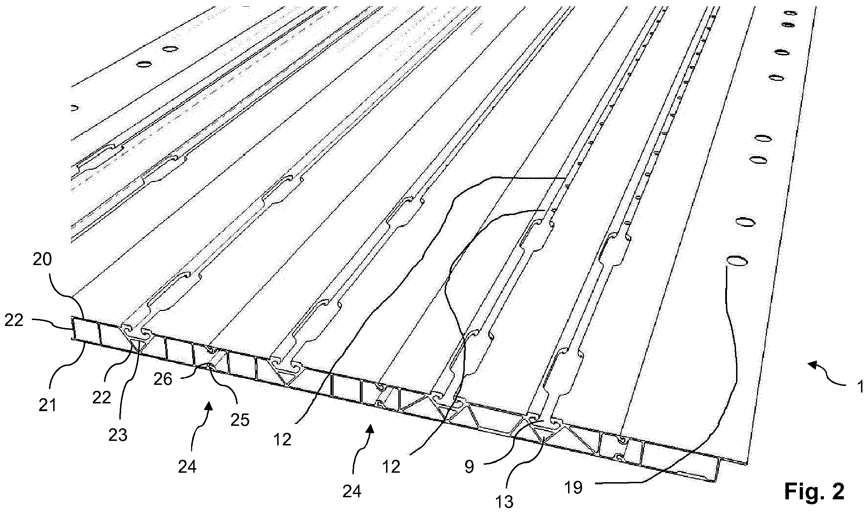

Wie in der vergrößerten Darstellung der Fig. 2 gezeigt, weisen die Profilelemente 2, 3, 4, 5, 6, 7 jeweils auf ihrer Ober- und Unterseite eine im Wesentlichen glatte Oberstruktur 20 bzw. Unterstruktur 21 auf, wobei die Unterstruktur 21 zur Befestigung an einer Tragstruktur oder auf einem Bodenblech des Fahrzeugs ausgebildet ist. Ober- und Unterstruktur 20, 21 sind zur Erhöhung der Steifigkeit des Ladebodens 1 durch in Längsrichtung durchgehende Streben 22 miteinander verbunden. Auch der Boden der Längsnut 9 kann als zwischen zwei Streben 22 angeordnete weitere Strebe 23 zur Verbesserung der Stabilität des Ladebodens dienen.

In Fig. 2 sind auch die Anschlusselemente 24 zu erkennen, durch die die Profilelemente 2, 3, 4, 5, 6, 7 miteinander verbunden sind. Im dargestellten Ausführungsbeispiel sind die Anschlusselemente 24 zum Herstellen einer formschlüssigen Verbindung ausgebildet, etwa als Lippen 25, die Rastnuten ausbilden, in die Rastvorsprünge 26 einrasten. Der Ladeboden 1 kann aus den als Strangpressprofile hergestellten, abgelängten und mit den Bohrungen 12, 19 versehenen Profilelementen 2, 3, 4, 5, 6, 7 beispielsweise durch seitliches Zusammenfügen oder auch durch Einschieben in Längsrichtung hergestellt werden.

Der Übersichtlichkeit halber sind nicht in allen Figuren alle Bezugszeichen dargestellt. Im Text nicht erläuterte Bezugszeichen haben die gleiche Bedeutung wie in den übrigen Figuren.

### Bezugszeichenliste

- 1: Ladeboden
- 2: Randelement
- 3: Zwischenelement
- 4: Mittelelement
- 5: Mittelelement
- 6: Zwischenelement
- 7: Randelement
- 8: Ladeschiene
- 9: Längsnut
- 10: Vorsprung
- 11: Aussparung
- 12: Bohrung
- 13: Hohlraum
- 14: Stirnende
- 15: Stirnende
- 16: Hohlraum
- 17: Hohlraum
- 18: Hohlraum
- 19: Bohrung
- 20: Oberstruktur
- 21: Unterstruktur
- 22: Strebe
- 23: Strebe
- 24: Anschlusselement
- 25: Lippe
- 26: Rastvorsprung

## Patentansprüche

1. Ladeboden für ein Fahrzeug, umfassend eine Mehrzahl von in einer Längsrichtung langerstreckten, nebeneinander angeordneten und miteinander verbundenen Profilelementen, wobei der Ladeboden (1) mindestens einen in der Längsrichtung durchgehenden Hohlraum (13, 16) aufweist,
**dadurch gekennzeichnet, dass**
der Hohlraum (13, 16) mindestens eine in der Längsrichtung nicht durchgehende seitliche Öffnung (12, 19) zu einem Außenraum des Ladebodens aufweist und im Übrigen seitlich geschlossen ist, so dass ein Klimatisierungsluftstrom, der durch den Hohlraum (13, 16) geleitet werden kann, aus dem Hohlraum (13, 16) austritt und dadurch in einen Innenraum des Fahrzeugs gelangt, wobei mindestens ein Profilelement eine Längsnut (9) aufweist und wobei die seitliche Öffnung (12) des in Längsrichtung durchgehenden Hohlraums (13) des Profilelements in die Längsnut (9) mündet.

2. Ladeboden nach Anspruch 1,
**dadurch gekennzeichnet, dass**
der mindestens eine in der Längsrichtung durchgehende Hohlraum (13, 16) zwischen einer Oberstruktur (20), einer Unterstruktur (21) und/oder mindestens einer die Ober- und die Unterstruktur (20, 21) eines Profilelements verbindenden Strebe (22, 23) ausgebildet ist.

3. Ladeboden nach Anspruch 1 oder 2,
**dadurch gekennzeichnet, dass**
der Hohlraum (13, 16) in einem vorderen und/oder einem hinteren Endbereich mit einer Klimatisierungsluftleitung verbindbar ist.

4. Ladeboden nach einem der vorhergehenden Ansprüche,
**dadurch gekennzeichnet, dass**
der Ladeboden (1) mehrere in Längsrichtung durchgehende Hohlräume (13, 16) aufweist, die an mindestens einer Stirnseite des Ladebodens (1) mit einem Klimatisierungsluftverteiler verbindbar sind.

5. Ladeboden nach einem der vorhergehenden Ansprüche, **dad**
**urch gekennzeichnet, dass**
der Ladeboden (1) mehrere seitliche Öffnungen (12, 19) aufweist, die insbesondere zur gleichen Seite des Ladebodens (1) gerichtet sind.

6. Ladeboden nach dem vorhergehenden Anspruch,
**dadurch gekennzeichnet, dass**
die Öffnungen (12, 19) unterschiedliche Öffnungsweiten aufweisen.

7. Ladeboden nach einem der vorhergehenden Ansprüche, **dad**
**urch gekennzeichnet, dass**
mindestens ein Profilelement mehrere sich in Längsrichtung erstreckende Hohlräume aufweist, die miteinander durch mindestens einen Durchbruch in einer Trennwand verbunden sind.

8. Ladeboden nach einem der vorhergehenden Ansprüche, **dad**
**urch gekennzeichnet, dass**
die Öffnungen (12) in einen Bodenbereich und/oder in einen Seitenbereich der Längsnut (9) münden.

9. Profilelement für einen Ladeboden eines Fahrzeugs, wobei das Profilelement einen in einer Längsrichtung des Profilelements erstreckten durchgehenden Hohlraum (13, 16) aufweist,
**dadurch gekennzeichnet, dass**
der Hohlraum (13, 16) mindestens eine in der Längsrichtung nicht durchgehende seitliche Öffnung (12, 19) zu einem Außenraum des Profilelements aufweist und im Übrigen seitlich geschlossen und dass das Profilelement eine Längsnut (9) aufweist, wobei die seitliche Öffnung (12) des in Längsrichtung durchgehenden Hohlraums (13) des Profilelements in die Längsnut (9) mündet.

## Claims

1. Loading floor for a vehicle, comprising a plurality of profile members which are elongate in a longitudinal direction, which are arranged beside each other and which are connected to each other, in which the loading floor (1) has at least one hollow space (13, 16) which is continuous in the longitudinal direction,
**characterized in that**
the hollow space (13, 16) has at least one lateral opening (12, 19), which is not continuous in the longitudinal direction, with respect to an outer space of the loading floor and which is further laterally closed, so that an air conditioning air stream which can be directed through the hollow space (13, 16) is discharged from the hollow space (13, 16) and thereby reaches an inner space of the vehicle, wherein at least one profile member has a longitudinal groove (9) and wherein the lateral opening (12) of the hollow space (13) of the profile member that is continuous in the longitudinal direction opens in the longitudinal groove (9).

2. Loading floor according to Claim 1,
**characterized in that**
the at least one hollow space (13, 16) which is continuous in the longitudinal direction is constructed between an upper structure (20), a lower structure (21) and/or at least one strut (22, 23) which connects the upper and lower structure (20, 21) of a profile member.

3. Loading floor according to Claim 1 or Claim 2, cha
racterized in that
the hollow space (13, 16) can be connected to an air conditioning air line in a front and/or a rear end region.

4. Loading floor according to one of the preceding claims,
**characterized in that**
the loading floor (1) has a plurality of hollow spaces (13, 16) which are continuous in the longitudinal direction and which can be connected to an air conditioning air distributor at least at one end face of the loading floor (1).

5. Loading floor according to one of the preceding claims,
**characterized in that**
the loading floor (1) has a plurality of lateral openings (12, 19) which are directed in particular to the same side of the loading floor (1).

6. Loading floor according to the preceding claim, cha
racterized in that
the openings (12, 19) have different opening widths.

7. Loading floor according to one of the preceding claims,
**characterized in that**
at least one profile member has a plurality of hollow spaces which extend in the longitudinal direction and which are connected to each other by means of at least one aperture in a partition wall.

8. Loading floor according to one of the preceding claims,
**characterized in that**
the openings (12) open in a bottom region and/or in a lateral region of the longitudinal groove (9).

9. Profile member for a loading floor of a vehicle, wherein the profile member has a continuous hollow space (13, 16) which extends in a longitudinal direction of the profile member,
**characterized in that**
the hollow space (13, 16) has at least one lateral opening (12, 19), which is not continuous in the longitudinal direction, with respect to an outer space of the profile member and which is further laterally closed, and **in that** the profile member has a longitudinal groove (9), wherein the lateral opening (12) of the hollow space (13) of the profile member that is continuous in the longitudinal direction opens in the longitudinal groove (9).

## Revendications

1. Plancher de chargement pour un véhicule, comprenant une multiplicité d'éléments de profilé allongés dans une direction longitudinale, disposés l'un à côté de l'autre et assemblés l'un à l'autre, dans lequel le plancher de chargement (1) présente au moins un espace creux (13, 16) continu dans la direction longitudinale,
**caractérisé en ce que** l'espace creux (13, 16) présente au moins une ouverture latérale (12, 19) non continue dans la direction longitudinale vers un espace extérieur du plancher de chargement et est pour le reste fermée latéralement, de telle manière qu'un flux d'air de climatisation, qui peut être conduit à travers l'espace creux (13, 16), sorte hors de l'espace creux (13, 16) et parvienne ainsi dans un habitacle du véhicule, dans lequel au moins un élément de profilé présente une rainure longitudinale (9) et dans lequel l'ouverture latérale (12) de l'espace creux continu en direction longitudinale (13) de l'élément de profilé débouche dans la rainure longitudinale (9).

2. Plancher de chargement selon la revendication 1, **caractérisé en ce que** ledit au moins un espace creux (13, 16) continu dans la direction longitudinale est formé entre une structure supérieure (20), une structure inférieure (21) et/ou au moins une entretoise (22, 23) reliant la structure supérieure et la structure inférieure (20, 21) d'un élément de profilé.

3. Plancher de chargement selon la revendication 1 ou 2, **caractérisé en ce que** l'espace creux (13, 16) peut être raccordé dans une région d'extrémité avant et/ou arrière à une conduite d'air de climatisation.

4. Plancher de chargement selon l'une quelconque des revendications précédentes, **caractérisé en ce que** le plancher de chargement (1) présente plusieurs espaces creux (13, 16) continus en direction longitudinale, qui peuvent être raccordés sur au moins un côté frontal du plancher de chargement (1) à un distributeur d'air de climatisation.

5. Plancher de chargement selon l'une quelconque des revendications précédentes, **caractérisé en ce que** le plancher de chargement (1) présente plusieurs ouvertures latérales (12, 19), qui sont dirigées en particulier vers le même côté du plancher de chargement (1).

6. Plancher de chargement selon l'une quelconque des revendications précédentes, **caractérisé en ce que** les ouvertures (12, 19) présentent des grandeurs d'ouverture différentes.

7. Plancher de chargement selon l'une quelconque des revendications précédentes, **caractérisé en ce qu'**au moins un élément de profilé présente plusieurs espaces creux s'étendant en direction longitudinale, qui sont reliés l'un à l'autre par au moins une percée dans une paroi de séparation.

8. Plancher de chargement selon l'une quelconque des revendications précédentes, **caractérisé en ce que** les ouvertures (12) débouchent dans une région de fond et/ou dans une région latérale de la rainure longitudinale (9).

9. Elément de profilé pour un plancher de chargement d'un véhicule, dans lequel l'élément de profilé présente un espace creux continu (13, 16) s'étendant dans une direction longitudinale de l'élément de profilé, **caractérisé en ce que** l'espace creux (13, 16) présente au moins une ouverture latérale (12, 19) non continue dans la direction longitudinale vers un espace extérieur de l'élément de profilé et est pour le reste fermée latéralement et **en ce que** l'élément de profilé présente une rainure longitudinale (9), dans lequel l'ouverture latérale (12) de l'espace creux continu en direction longitudinale (13) de l'élément de profilé débouche dans la rainure longitudinale (9).
